# FASCICULE DE BREVET EUROPEEN

(11) **EP 2 362 818 B1**
(45) Date de publication et mention de la délivrance du brevet: **05.09.2012**
(21) Numéro de dépôt: 09797075.0
(22) Date de dépôt: 24.11.2009
(51) Int. Cl.: B23P 19/06

(54) **DISPOSITIF DE SERTISSAGE D'UN ÉLÉMENT À SERTIR SUR UNE PIÈCE**
VORRICHTUNG ZUM QUETSCHEN EINES AN EIN TEIL ZU QUETSCHENDEN ELEMENTS
DEVICE FOR CRIMPING AN ELEMENT TO BE CRIMPED ON A PART

(30) Priorité: 28.11.2008 FR 0806719
(43) Date de publication de la demande: 07.09.2011
(73) Titulaire: Renault S.A.S., 92100 Boulogne-Billancourt (FR)
(72) Inventeur: SALVATI, Francis, F-59287 Guesnain (FR); STIENNE, Eric, F-59151 Arleux (FR); FACON, Hervé, F-59553 Esquerchin (FR)
(86) Numéro de dépôt international: PCT/FR2009/052282
(87) Numéro de publication internationale: WO 2010/061126

(56) Documents cités:
- US-A- 6 161 279
- US-A1- 2002 166 221

## Description

La présente invention concerne un dispositif de sertissage d'un élément à sertir sur une pièce, notamment sur une pièce de véhicule automobile, voir par exemple le document US-A-6 161 279, sur lequel se base le préambule de la revendication 1.

Le sertissage est une opération simple, d'assemblage de deux pièces. On procède à une déformation de la matière, soit de la pièce sur laquelle est serti l'élément à sertir, soit de l'élément à sertir lui-même, soit des deux. Le sertissage est utilisé pour immobiliser des pièces, sans soudure. Par exemple, pour fixer un écrou sur une pièce, sans la déformer, on peut réaliser un écrou avec une bague centrale, ou guidage, qui sera repliée de l'autre côté de la pièce, préalablement percée, comme pour un rivet ; c'est ce que l'on appelle un écrou serti. Comme un rivet, cet assemblage est indémontable. Il est également possible, de fixer un élément à sertir, par déformation de la pièce sur laquelle est fixé cet élément. Dans ce cas, la pièce peut ne pas comporter de trou.

Le dispositif de sertissage, encore appelée sertisseuse, comporte un poinçon, qui est mobile en translation, et une matrice de percussion, située sous l'extrémité libre du poinçon. La pièce, sur laquelle l'élément à sertir doit être fixé, est placée sur la matrice. L'élément à sertir est frappé par l'extrémité libre du poinçon. C'est le choc de l'élément à sertir, frappé sur la pièce, par le poinçon, qui déforme cette dernière et/ou l'élément à sertir, contre la face dite « opérationnelle » de la matrice, et permet la fixation de l'élément à sertir sur la pièce.

Le dispositif comporte en général un magasin et un système d'amenée des éléments à sertir. Le magasin contient une pluralité d'éléments à sertir qui sont déplacés, l'un après l'autre, au niveau de l'entrée d'un passage ménagé dans une pièce de positionnement de l'élément à sertir. Ce passage présente une sortie qui débouche au-dessus de la face opérationnelle de la matrice. L'extrémité libre du poinçon se déplace, dans et au-delà de ce passage, entre une position haute, dans laquelle l'extrémité libre est située au-dessus de l'entrée du passage, et une position basse, située dans le passage et qui permet le sertissage. Lorsque le poinçon est en position haute, le système d'amenée du magasin déplace un élément à sertir au niveau de l'entrée du passage, le déplacement de l'extrémité libre du poinçon entraîne cet élément à sertir dans le passage et réalise le sertissage au niveau de la sortie du passage.

Or, il arrive souvent que deux éléments à sertir soient introduits, superposés l'un sur l'autre, dans le passage précité. Le poinçon entraîne alors les deux éléments à sertir dans le passage et frappe les éléments à sertir, empilés, contre la pièce et la matrice, avec la même intensité que pour sertir un seul élément à sertir. Le poinçon exerce alors une force sur l'élément à sertir du dessus, qui se transmet à l'élément à sertir du dessous. Il y a dissipation d'énergie dans le déplacement relatif des deux éléments à sertir situés dans le passage. Il en résulte qu'au lieu de déformer la pièce et/ou l'élément à sertir situé en dessous, de manière à réaliser son sertissage, le poinçon déforme l'élément à sertir du dessous mais d'une manière qui ne permet pas son sertissage. L'élément à sertir du dessous à tendance à être écrasé et à gonfler, détériorant la pièce de positionnement, qui se fissure, et/ou l'extrémité libre du poinçon. La sertisseuse doit alors être arrêtée immédiatement et un opérateur doit venir retirer les éléments à sertir et remplacer la pièce de positionnement et/ou le poinçon.

Dans le but de résoudre ce problème, la présente invention propose un dispositif de sertissage d'un élément à sertir sur une pièce qui présente une surface de sertissage, ledit dispositif étant du type comprenant, de manière connue :
- un poinçon, mobile en translation selon une direction D et présentant une extrémité libre, apte à appliquer, selon ladite direction D, sur ledit élément à sertir, une force d'intensité donnée pour sertir ledit élément à sertir sur ladite surface de sertissage ;
- une pièce de positionnement dudit élément à sertir, dans laquelle est ménagé un passage qui présente une sortie, ladite extrémité libre dudit poinçon étant apte à se déplacer selon ladite direction D, dans ledit passage, et ledit passage étant apte à recevoir ledit élément à sertir dans une position adaptée à son sertissage sur ladite surface de sertissage ;
- une matrice de percussion, qui présente une face opérationnelle, maintenue à une distance déterminée, en regard de ladite sortie dudit passage, par des moyens de maintien, ladite face opérationnelle étant apte, d'une part, à recevoir ladite surface de sertissage, ladite surface de sertissage étant disposée sensiblement perpendiculairement à ladite direction D et, d'autre part, à coopérer avec ladite extrémité libre dudit poinçon pour déformer ladite surface de sertissage et/ou ledit élément à sertir, afin de fixer ledit élément à sertir sur ladite surface de sertissage.

Selon l'invention, de manière caractéristique, lesdits moyens de maintien de ladite matrice comportent un élément frangible, apte à se rompre lorsqu'une force d'intensité supérieure à une valeur limite est exercée sur ladite face opérationnelle, moyennant quoi, lorsque ledit poinçon exerce, sur ladite matrice, ladite force d'intensité supérieure à ladite valeur limite, ledit élément frangible se rompt et ladite matrice est déplacée par ledit poinçon.

Le déplacement de la matrice par le poinçon permet d'éloigner cette dernière de l'extrémité libre du poinçon. Il en résulte que, lorsque deux éléments à sertir sont introduits empilés dans le passage, le poinçon exerce réellement une force sur la matrice, puisque l'énergie du choc entre l'élément à sertir et la pièce n'est pas dissipée dans la déformation de l'un et/ou l'autre de ces éléments. Si cette force présente une intensité supérieure à une valeur limite donnée et risque d'endommager le poinçon et/ou la pièce de positionnement, la rupture de l'élément frangible qui maintient la matrice permet de dissiper l'énergie du choc provoqué par le déplacement du poinçon, dans le déplacement de la matrice. Celle-ci est éloignée de l'extrémité libre du poinçon et n'est plus soumise aux coups répétés de ce dernier. Elle ne risque plus d'être endommagée.

Avantageusement, le dispositif comporte des moyens de détection de la rupture dudit élément frangible et une alimentation en énergie et lesdits moyens de détection sont couplés avec des moyens de coupure de ladite alimentation de manière à ce que la rupture dudit élément frangible actionne lesdits moyens de coupure qui coupent ladite alimentation par l'intermédiaire desdits moyens de détection. Ainsi, le bris ou la rupture de l'élément frangible provoque, non seulement, le déplacement de la matrice, mais encore, l'arrêt du dispositif, en le privant d'énergie. Tout risque de détérioration est donc ainsi rapidement écarté.

Le déplacement de la matrice n'est pas limité selon l'invention. Ainsi, la matrice peut s'écarter latéralement par rapport au poinçon. Selon un mode de réalisation, le dispositif comporte une butée frangible sur laquelle vient en appui ladite matrice de percussion. Dans ce cas, le déplacement de la matrice a lieu selon la direction D de déplacement du poinçon.

Selon un mode de réalisation particulier, le dispositif comporte un support de ladite matrice, intercalé entre ladite matrice et ladite butée frangible et un guide qui comporte un évidement dans lequel ledit support est apte à se déplacer en translation selon ladite direction D, moyennant quoi, lors de la rupture de ladite butée frangible, ledit support peut se déplacer dans ledit guide pour éloigner ladite matrice.

Avantageusement, le dispositif comporte alors des moyens de rappel, montés dans ledit guide et qui sont aptes à exercer, sur ladite matrice, une force qui la repousse vers ledit poinçon. Ces moyens de rappel permettent, notamment, de récupérer facilement le support et la matrice après leur déplacement.

Selon un mode de réalisation particulier, un connecteur est monté mobile en translation selon ladite direction D, dans ledit guide, sous ladite butée frangible, ledit connecteur présentant une surface externe longitudinale qui présente une première et une seconde portions, de section différente, et un palpeur est disposé en regard de ladite première portion, de manière à détecter la translation dudit connecteur, lors de la rupture de ladite butée frangible, par détection de la variation de section dudit connecteur, lorsque ledit connecteur est poussé par ladite matrice, lors de la rupture de ladite butée frangible.

Le dispositif peut également comporter un magasin qui contient une pluralité d'éléments à sertir et qui comporte un système d'amenée d'un desdits éléments à sertir, ledit système d'amenée étant apte à entraîner un desdits éléments à sertir dudit magasin de manière à ce que ladite extrémité libre dudit poinçon exerce sur lui ladite force d'intensité donnée.

L'extrémité libre dudit poinçon peut comporter un embout interchangeable, ce qui, en cas de détérioration de cet embout, permet de ne pas changer tout le poinçon entier. Le changement de l'embout est rapide et ne nécessite pas de démontage conséquent.

Le mode de coopération entre l'extrémité libre, ou l'embout précité, et l'élément à sertir n'est pas limité selon l'invention. Il peut s'agir d'un simple contact. Avantageusement, l'extrémité libre dudit poinçon est apte à coopérer par emboîtement avec ledit élément à sertir. Par les termes « extrémité libre », on entend, au sens de la présente invention, l'extrémité libre du poinçon, lorsque ce dernier ne comporte pas d'embout, ou l'embout, lorsque le poinçon comporte un tel embout.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue en coupe verticale d'un mode de réalisation du dispositif selon l'invention, en fonctionnement normal ; et
- la Figure 2 représente une vue en coupe verticale du dispositif de la figure 1, lorsque deux éléments à sertir se sont introduits dans la pièce de positionnement.

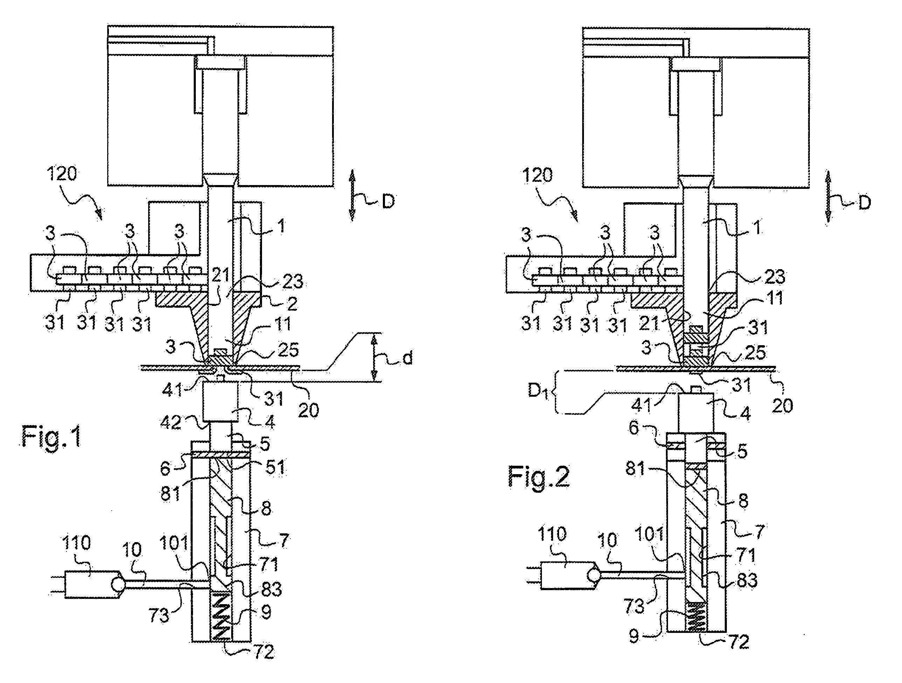

La Figure 1 illustre un mode de réalisation du dispositif de la présente invention. Dans le mode de réalisation décrit ici, le sertissage est mis en oeuvre par la déformation d'une portion de l'élément à sertir. Il est bien évident que le dispositif de l'invention concerne également le sertissage d'un élément à sertir sur une pièce, par déformation d'une zone de cette pièce, éventuellement couplée à une déformation de l'élément à sertir.

Le dispositif comporte un poinçon 1 qui présente une extrémité libre 11. Le poinçon 1 se déplace en translation selon la direction D, qui est verticale dans le cas présent. Le dispositif comporte une pièce de positionnement 2, dans laquelle est ménagé un passage vertical 21, c'est-à-dire parallèle à la direction D. Le passage 21 présente une entrée 23 et une sortie 25. La pièce de positionnement 2 est disposée de manière à ce que l'extrémité libre 11 du poinçon 1 puisse se déplacer dans le passage 21. Le poinçon 1 se déplace entre une position haute, dans laquelle son extrémité libre 11 est disposée au-dessus et à distance de l'entrée 23 du passage 21, et une position basse, dans laquelle l'extrémité libre 11 est disposée sensiblement à proximité de la sortie 25 du passage 21.

Comme représenté sur la figure 1, le dispositif comporte également une matrice de percussion 4 qui présente une face fonctionnelle 41, disposée en regard de la sortie 25 du passage 21, à une distance d déterminée de cette dernière. La matrice de percussion 4 présente une face d'appui 42, opposée à la face fonctionnelle 41. Cette face d'appui 42 est montée sur un support 5. Le support 5 est, par exemple, cylindrique et présente, outre son extrémité connectée à la face d'appui 42, une extrémité libre 51 qui est en appui sur une plaquette frangible 6. Cette plaquette frangible 6 est insérée transversalement dans un guide 7. Ce guide 7 présente un évidement vertical 71 dans lequel le support 5 peut coulisser verticalement. L'évidement 71 présente une entrée, dans laquelle est insérée l'extrémité libre du support 5, et un fond 72. La plaquette frangible 6 s'étend transversalement à cet évidement 71 et est insérée dans une fente, transversale au guide 7, située en dessous de l'entrée de l'évidement 71.

L'évidement 71 contient un connecteur 8, qui est disposé sous la plaquette frangible 6 et qui peut se déplacer en translation verticale dans le passage 71. Le connecteur 8 se présente sous la forme, par exemple, d'un cylindre qui présente une extrémité supérieure 81, disposée directement sous la plaquette 6, et un palier 83 de plus grande section, disposé à son autre extrémité. La section du palier 83 correspond sensiblement à la section de l'évidement 71. La portion située au-dessus du palier 83 présente une section inférieure. Des moyens de rappel 9 sont disposés sur le fond 72 de l'évidement 71. L'extrémité du connecteur 8, située au niveau du palier 83, repose sur ces moyens de rappel 9 qui exercent une force qui repousse le connecteur 8 vers l'entrée de l'évidement 71.

L'évidement 71 communique avec un conduit 73, qui lui est sensiblement perpendiculaire. Le conduit 73 est ménagé à proximité du fond 72 de l'évidement 71 et traverse l'épaisseur de la paroi du guide 7. La tête 101 d'un palpeur 10 est insérée dans le conduit 73 et vient en contact du palier 83. Le palpeur 10 est relié à des moyens de coupure 110 de l'alimentation, électrique ou autre, du dispositif. Cette alimentation sert, notamment à déplacer le poinçon 1.

Comme représenté sur la figure 1, le dispositif comporte également un magasin 120 qui contient des écrous 3 qui sont à sertir sur une pièce 20. Le magasin 120 comporte un système d'amenée (non représenté) des écrous 3, qui déplace les écrous 3 et les dispose au niveau de l'entrée 23 du passage 21, lorsque le poinçon 1 est en position haute. Les écrous 3 présentent une bague déformable 31 qui sert à leur fixation par sertissage. Les écrous 3 sont disposés dans le magasin 120 de manière à ce que lorsqu'ils entrent, un par un, dans le passage 21, la bague 31 soit orientée vers la sortie 25 du passage 21.

Le fonctionnement normal du dispositif de l'invention va maintenant être décrit en référence à la figure 1.

Une pièce 20 qui présente une portion de sertissage, plane, est disposée sur la face fonctionnelle 41 de la matrice 4. La portion de sertissage est sensiblement perpendiculaire à la direction D. Cette portion de sertissage présente un trou qui est disposé sous la sortie 25 du passage 21. Le poinçon 1 est en position haute, au-dessus et à distance de l'entrée 23 du passage 21. Le magasin 120 et ses moyens d'amenée déplacent un écrou 3, au niveau de l'entrée 23 du passage 21. Le poinçon 1 est simultanément déplacé vers la pièce de positionnement 2 ; l'extrémité libre 11 du poinçon 1 s'emboîte dans l'écrou 3 et emporte ce dernier dans le passage 21. La bague 31 traverse le trou ménagé dans la portion de sertissage et est déformée contre la face opérationnelle 41 de la matrice 4, par le poinçon 1 qui exerce une force d'intensité donnée. La face opérationnelle 41 comporte une forme adaptée pour déformer la bague autour du trou de manière à fixer l'écrou sur la portion de sertissage, la bague 31 étant écartée autour du trou, sur une face de la portion de sertissage, tandis que l'écrou 3 est disposé sur la face opposée de cette portion de sertissage.

Lorsque l'écrou 3 est serti, le poinçon 1 remonte verticalement jusqu'à sa position haute, la pièce 20 est remplacée par une autre pièce ou déplacée pour qu'une autre portion de sertissage, sur laquelle doit être serti un écrou 3, soit disposée au niveau de la sortie 25 du passage 21.

Le fonctionnement du dispositif de l'invention, dans le cas où deux écrous 3 sont superposés l'un sur l'autre et introduits dans le passage 21, va maintenant être décrit en référence à la figure 2.

Lorsque l'extrémité libre 11 du poinçon emporte deux écrous 3 (ou plus) superposés, ces derniers sont déplacés ensemble dans le passage 21 en direction de la sortie 25 de ce dernier. L'intensité de la force exercée par le poinçon 1 est constante. Du fait de la présence du second écrou 3, cette force ne permet pas de déformer la bague 31 de l'écrou situé le plus en bas dans le passage 21. Il en résulte que, l'énergie ne pouvant être dissipée par la déformation de la bague 31 (et/ou éventuellement de la pièce 20), cette énergie est transmise à la matrice 4. Cette dernière transmet cette énergie à la plaquette 6 sur laquelle elle repose. Lorsque cette énergie dépasse une valeur limite, la plaquette 6 se rompt. Le support 5 est poussé dans l'évidement 71 par le poinçon 1 qui frappe la matrice 4. Le support 5 pousse alors le connecteur 8 vers le fond 72 de l'évidement 71, selon la direction D. Le connecteur 8 se déplaçant vers le fond 72 de l'évidement 71, la tête 101 du palpeur 10 n'est plus en contact avec le palier 83. La tête ou partie fonctionnelle 101 du palpeur 10 se déplace vers l'évidement 71 pour venir en contact avec la portion du connecteur 8 qui présente une section plus faible. Le déplacement de la tête 101 du palpeur est détecté par les moyens de coupure 110 qui coupent l'alimentation du poinçon 1. Le poinçon 1 est stoppé sans avoir occasionné de dégâts, ni à la pièce de positionnement 2, ni à lui-même.

Par ailleurs, lorsque le support 5 se déplace dans l'évidement 71, la matrice 4 s'éloigne de la sortie 25 du passage 21, ce qui peut engendrer la chute d'au moins un écrou 3 disposé dans le passage 21, protégeant ainsi la pièce de positionnement 2. De plus, la matrice 4 étant éloignée d'une distance D1 supérieure à d (voir figure 2), il n'y a plus de choc répété entre le poinçon 1 et cette dernière, ce qui évite les déformations du ou des écrous 3 logés dans le passage 21, même si l'alimentation du poinçon n'est pas coupée immédiatement (manuellement ou automatiquement).

La plaquette 6 peut être en matière plastique. On choisit sa résistance de manière à ce qu'elle se brise afin de permettre le déplacement du support 5 dans l'évidement 71. Par ailleurs, la valeur limite au-delà de laquelle la plaquette 6 se brise peut être déterminée par l'Homme du Métier en fonction notamment de la force exercée par le poinçon 1.

Dans le mode de réalisation représenté, c'est l'extrémité libre 11 du poinçon 1 qui est apte à s'emboîter sur l'écrou 3. Ce mode de coopération n'est pas limitatif de l'invention. L'extrémité libre 11 du poinçon 1 peut également seulement venir en contact avec l'écrou 3 de manière à le pousser dans le passage 21. De même, il est possible de munir l'extrémité libre 11 du poinçon 1 d'un embout interchangeable, dont la fonction est la même que celle de l'extrémité libre 11 du poinçon 1 décrite ci-dessus. Cet embout peut s'emboîter sur l'écrou 3. Tout autre type de coopération entre l'écrou 3 et l'embout est également compris dans le cadre de la présente invention. La présence d'un embout interchangeable permet, en cas de dommage du poinçon 1 de ne changer que l'embout au lieu du poinçon entier.

## Revendications

1. Dispositif de sertissage d'un élément à sertir (3) sur une pièce (20) qui présente une surface de sertissage, ledit dispositif étant du type comprenant :
- un poinçon (1), mobile en translation selon une direction D et présentant une extrémité libre (11), apte à appliquer, selon ladite direction D, sur ledit élément à sertir (3), une force d'intensité donnée pour sertir ledit élément à sertir (3) sur ladite surface de sertissage ;
- une pièce de positionnement (2) dudit élément à sertir (3) dans laquelle est ménagé un passage (21) qui présente une sortie (25), ladite extrémité libre (11) dudit poinçon (1) étant apte à se déplacer, selon ladite direction D, dans ledit passage (21) et ledit passage (21) étant apte à recevoir ledit élément à sertir (3) dans une position adaptée à son sertissage sur ladite surface de sertissage ;
- une matrice de percussion (4) qui présente une face opérationnelle (41), maintenue à une distance déterminée (d) en regard de ladite sortie (25) dudit passage (21), par des moyens de maintien, ladite face opérationnelle (41) étant apte, d'une part, à recevoir ladite surface de sertissage, ladite surface de sertissage étant disposée sensiblement perpendiculairement à ladite direction D, et, d'autre part, à coopérer avec ladite extrémité libre (11) dudit poinçon (1) pour déformer ladite surface de sertissage et/ou ledit élément à sertir (3) afin de fixer ledit élément à sertir (3) sur ladite surface de sertissage ;
**caractérisé en ce que** lesdits moyens de maintien de ladite matrice comportent un élément frangible (6), apte à se rompre lorsqu'une force d'intensité supérieure à une valeur limite est exercée sur ladite face opérationnelle (41), moyennant quoi, lorsque ledit poinçon (1) exerce, sur ladite matrice (4), ladite force d'intensité supérieure à ladite valeur limite, ledit élément frangible (3) se rompt et ladite matrice (4) est déplacée par ledit poinçon (1).

2. Dispositif selon la revendication 1, **caractérisé en ce qu'**il comporte des moyens de détection (8 ; 10) de la rupture dudit élément frangible (6) et une alimentation en énergie.

3. Dispositif selon la revendication 2, **caractérisé en ce que** lesdits moyens de détection (8) sont couplés avec des moyens de coupure (110) de ladite alimentation de manière à ce que la rupture dudit élément frangible (6) actionne lesdits moyens de coupure (110) qui coupent ladite alimentation par l'intermédiaire desdits moyens de détection (8 ; 10).

4. Dispositif selon l'une des revendications précédentes, **caractérisé en ce qu'**il comporte une butée frangible (6), sur laquelle vient en appui ladite matrice de percussion (4).

5. Dispositif selon la revendication 4, **caractérisé en ce qu'**il comporte un support (5) de ladite matrice (4), intercalé entre ladite matrice (4) et ladite butée frangible (6) et un guide (7) qui comporte un évidement (71) dans lequel ledit support (5) est apte à se déplacer en translation selon ladite direction D, moyennant quoi, lors de la rupture de ladite butée frangible (6), ledit support (5) peut se déplacer dans ledit guide (7) pour éloigner ladite matrice (4).

6. Dispositif selon la revendication 4 ou 5, **caractérisé en ce qu'**il comporte des moyens de rappel (9), montés dans ledit guide (7) et qui sont aptes à exercer, sur ladite matrice (4), une force qui la repousse vers ledit poinçon (1).

7. Dispositif selon la revendication 5 ou 6, **caractérisé en ce qu'**un connecteur (8) est monté, mobile en translation selon ladite direction D, dans ledit guide (7), sous ladite butée frangible (6), ledit connecteur (8) présentant une surface externe longitudinale qui présente une première (81) et une seconde (83) portions, de section différente ; et **en ce qu'**un palpeur (10) est disposé en regard de ladite première portion (83), de manière à détecter la translation dudit connecteur (8) lors de la rupture de ladite butée frangible (6), par détection de la variation de section dudit connecteur (8), lorsque ledit connecteur (8) est poussé par ladite matrice (4), lors de la rupture de ladite butée frangible (6).

8. Dispositif selon l'une quelconque des revendications précédentes, **caractérisé en ce qu'**il comporte un magasin (120) qui contient une pluralité d'éléments à sertir (3) et qui comporte un système d'amenée d'un desdits éléments à sertir (3), ledit système d'amenée étant apte à entraîner un desdits éléments à sertir (3) dudit magasin (120) de manière à ce que ladite extrémité libre (11) dudit poinçon (1) exerce sur lui ladite force d'intensité donnée.

9. Dispositif selon l'une quelconque des revendications précédentes, **caractérisé en ce que** ladite extrémité libre (11) dudit poinçon (1) comporte un embout interchangeable.

10. Dispositif selon l'une quelconque des revendications précédentes, **caractérisé en ce que** ladite extrémité libre (11) dudit poinçon (1) est apte à coopérer par emboîtement avec ledit élément à sertir (3).

## Claims

1. Device for crimping an element to be crimped (3) to a part (20) which has a crimping surface, said device being of the type comprising:
- a punch (1) capable of translational movement in a direction D and having a free end (11) capable of applying to said element to be crimped (3), in said direction D, a force of a given intensity in order to crimp said element to be crimped (3) onto said crimping surface;
- a positioning piece (2) for positioning said element to be crimped (3), in which positioning piece there is formed a passage (21) which has an exit (25), said free end (11) of said punch (1) being capable of moving, in said direction D, in said passage (21), and said passage (21) being capable of accepting said element to be crimped (3) in a position suited to it being crimped to said crimping surface;
- a percussion die (4) which has an operational face (41) held a determined distance (d) facing said exit (25) of said passage (21) by holding means, said operational face (41) being capable, firstly, of accepting said crimping surface, said crimping surface being positioned substantially perpendicular to said direction D and, secondly, of collaborating with said free end (11) of said punch (1) in order to deform said crimping surface and/or said element to be crimped (3) so as to secure said element to be crimped (3) onto said crimping surface;
**characterized in that** said die holding means comprise a frangible element (6), capable of breaking when a force of an intensity higher than a limit value is applied to said operational face (41), by means of which, when said punch (1) applies to said die (4) said force of an intensity higher than said limit value, said frangible element (3) breaks and said die (4) is moved by said punch (1).

2. Device according to Claim 1, **characterized in that** it comprises detection means (8; 10) for detecting the breakage of said frangible element (6) and an energy supply.

3. Device according to Claim 2, **characterized in that** said detection means (8) are coupled to cut-off means (110) for cutting off said supply so that the breakage of said frangible element (6) actuates said cut-off means (110) which cut off said supply via said detection means (8; 10).

4. Device according to one of the preceding claims, **characterized in that** it comprises a frangible limit stop (6) against which said percussion die (4) comes to bear.

5. Device according to Claim 4, **characterized in that** it comprises a support (5) for said die (4), interposed between said die (4) and said frangible limit stop (6), and a guide (7) which comprises a recess (71) in which said support (5) is capable of a translational movement in said direction D, by means of which, when said frangible limit stop (6) breaks, said support (5) can move in said guide (7) in order to move said die (4) away.

6. Device according to Claim 4 or 5, **characterized in that** it comprises return means (9) which are mounted in said guide (7) and which are capable of applying to said die (4) a force which pushes it back toward said punch (1).

7. Device according to Claim 5 or 6, **characterized in that** a connector (8) is mounted, with the ability to effect a translational movement in said direction D, in said guide (7), under said frangible limit stop (6), said connector (8) having a longitudinal external surface which has a first portion (81) and a second portion (83), of different cross sections; and **in that** a feeler (10) is positioned facing said first portion (83), so as to detect the translational movement of said connector (8) as said frangible limit stop (6) breaks, by detecting the variation in cross section of said connector (8) when said connector (8) is pushed by said die (4) as said frangible limit stop (6) breaks.

8. Device according to any one of the preceding claims, **characterized in that** it comprises a magazine (120) containing a plurality of elements to be crimped (3) and comprising a feed system for feeding one of said elements to be crimped (3), said feed system being capable of carrying one of said elements to be crimped (3) from said magazine (120) such that said free end (11) of said punch (1) applies said force of given intensity to it.

9. Device according to any one of the preceding claims, **characterized in that** the said free end (11) of said punch (1) comprises an interchangeable end fitting.

10. Device according to any one of the preceding claims, **characterized in that** said free end (11) of said punch (1) is capable of collaborating in the manner of a socket joint with said element to be crimped (3).

## Patentansprüche

1. Vorrichtung zum Crimpen eines zu crimpenden Elements (3) auf ein Bauteil (20), das eine Crimpfläche aufweist, wobei die Vorrichtung von der Art ist, die enthält:
- einen Stempel (1), der in einer Richtung D translationsbeweglich ist und ein freies Ende (11) aufweist, das in der Richtung D eine Kraft von gegebener Stärke auf das zu crimpende Element (3) anwenden kann, um das zu crimpende Element (3) auf die Crimpfläche zu crimpen;
- ein Positionierbauteil (2) des zu crimpenden Elements (3), in dem ein Durchgang (21) ausgespart ist, der einen Ausgang (25) aufweist, wobei das freie Ende (11) des Stempels (1) sich gemäß der Richtung D in dem Durchgang (21) verschieben kann, und der Durchgang (21) das zu crimpende Element (3) in einer Stellung aufnehmen kann, die an sein Crimpen auf die Crimpfläche angepasst ist;
- eine Schlagmatrix (4), die eine Betriebsseite (41) aufweist, die in einer bestimmten Entfernung (d) gegenüber dem Ausgang (25) des Durchgangs (21) durch Halteeinrichtungen gehalten wird, wobei die Betriebsseite (41) einerseits die Crimpfläche aufnehmen, wobei die Crimpfläche im Wesentlichen lotrecht zur Richtung D angeordnet ist, und andererseits mit dem freien Ende (11) des Stempels (1) zusammenwirken kann, um die Crimpfläche und/oder das zu crimpende Element (3) zu verformen, um das zu crimpende Element (3) an der Crimpfläche zu befestigen;
**dadurch gekennzeichnet, dass** die Halteeinrichtungen der Matrix ein zerbrechliches Element (6) aufweisen, das reißen kann, wenn eine Kraft einer größeren Stärke als ein Grenzwert auf die Betriebsseite (41) ausgeübt wird, wodurch, wenn der Stempel (1) auf die Matrix (4) die Kraft größerer Stärke als der Grenzwert ausübt, das zerbrechliche Element (3) reißt und die Matrix (4) vom Stempel (1) verschoben wird.

2. Vorrichtung nach Anspruch 1, **dadurch gekennzeichnet, dass** sie Erfassungseinrichtungen (8; 10) des Reißens des zerbrechlichen Elements (6) und eine Energieversorgung aufweist.

3. Vorrichtung nach Anspruch 2, **dadurch gekennzeichnet, dass** die Erfassungseinrichtungen (8) mit Einrichtungen (110) zum Abschalten der Versorgung gekoppelt sind, damit das Reißen des zerbrechlichen Elements (6) die Abschalteinrichtungen (110) betätigt, die die Versorgung mittels der Erfassungseinrichtungen (8; 10) abschalten.

4. Vorrichtung nach einem der vorhergehenden Ansprüche, **dadurch gekennzeichnet, dass** sie einen zerbrechlichen Anschlag (6) aufweist, auf den die Schlagmatrix (4) in Auflage kommt.

5. Vorrichtung nach Anspruch 4, **dadurch gekennzeichnet, dass** sie einen Träger (5) der Matrix (4), der zwischen die Matrix (4) und den zerbrechlichen Anschlag (6) eingefügt ist, und eine Führung (7) aufweist, die eine Aussparung (71) aufweist, in der der Träger (5) sich in Translationsrichtung gemäß der Richtung D verschieben kann, wodurch der Träger (5) sich beim Reißen des zerbrechlichen Anschlags (6) in der Führung (7) verschieben kann, um die Matrix (4) zu entfernen.

6. Vorrichtung nach Anspruch 4 oder 5, **dadurch gekennzeichnet, dass** sie Rückstelleinrichtungen (9) aufweist, die in die Führung (7) montiert sind und auf die Matrix (4) eine Kraft ausüben können, die sie zum Stempel (1) zurückschiebt.

7. Vorrichtung nach Anspruch 5 oder 6, **dadurch gekennzeichnet, dass** ein Verbinder (8) gemäß der Richtung D translationsbeweglich in die Führung (7) unter dem zerbrechlichen Anschlag (6) montiert ist, wobei der Verbinder (8) eine äußere Längsfläche aufweist, die einen ersten (81) und einen zweiten Teil (83) unterschiedlichen Querschnitts aufweist; und dass ein Taster (10) gegenüber dem ersten Teil (83) angeordnet ist, um die Translationsbewegung des Verbinders (8) beim Reißen des zerbrechlichen Anschlags (6) durch Erfassung der Querschnittsänderung des Verbinders (8) zu erfassen, wenn der Verbinder (8) von der Matrix (4) beim Reißen des zerbrechlichen Anschlags (6) geschoben wird.

8. Vorrichtung nach einem der vorhergehenden Ansprüche, **dadurch gekennzeichnet, dass** sie ein Magazin (120) aufweist, das eine Vielzahl von zu crimpenden Elementen (3) enthält, und das ein Zufuhrsystem für eines der zu crimpenden Elemente (3) aufweist, wobei das Zufuhrsystem eines der zu crimpenden Elemente (3) vom Magazin (120) so antreiben kann, dass das freie Ende (11) des Stempels (1) darauf die Kraft gegebener Stärke ausübt.

9. Vorrichtung nach einem der vorhergehenden Ansprüche, **dadurch gekennzeichnet, dass** das freie Ende (11) des Stempels (1) einen austauschbaren Aufsatz aufweist.

10. Vorrichtung nach einem der vorhergehenden Ansprüche, **dadurch gekennzeichnet, dass** das freie Ende (11) des Stempels (1) durch Ineinanderfügen mit dem zu crimpenden Element (3) zusammenwirken kann.
